**Europäisches Patentamt**

**European Patent Office**

**Office européen des brevets**

(19)

(11) Veröffentlichungsnummer: **0 157 339**
A2

## (12) EUROPÄISCHE PATENTANMELDUNG

(21) Anmeldenummer: **85103552.7**

(22) Anmeldetag: **26.03.85**

(51) Int. Cl.⁴: **C 10 G 1/00**

(30) Priorität: **04.04.84 DE 3412536**

(43) Veröffentlichungstag der Anmeldung: **09.10.85**
**Patentblatt 85/41**

(84) Benannte Vertragsstaaten: **AT BE CH FR GB IT LI NL SE**

(71) Anmelder: **Fried. Krupp Gesellschaft mit beschränkter Haftung, Altendorfer Strasse 103, D-4300 Essen 1 (DE)**

(72) Erfinder: **Coenen, Hubert, Dr., Wortbergrode 13, D-4300 Essen 1 (DE)**
Erfinder: **Effelsberg, Heinz, Theodor-Suhnel-Strasse 61, D-4330 Mülheim/Ruhr 12 (DE)**
Erfinder: **Hagen, Rainer, Bottroper Weg 14, D-1000 Berlin 27 (DE)**

(54) Verfahren zur Herstellung von Kohlenwasserstoffen aus Klärschlamm.

(57) Es wird ein Verfahren zur Herstellung von Kohlenwasserstoffen aus Klärschlamm beschrieben, bei dem der Klärschlamm bei einer Temperatur von 300 bis 600 °C und einem Druck von 100 bis 500 bar behandelt wird, bei dem gleichzeitig oder unmittelbar nach dieser Behandlung bei gleichem Druck und gleicher Temperatur in Gegenwart eines Katalysators eine Hydrierung mit Wasserstoff erfolgt und bei dem die Gasphase danach durch stufenweise Senkung des Drucks und/oder der Temperatur in ihre Bestandteile zerlegt wird. Durch das Verfahren wird der Klärschlamm bei gleichzeitiger Gewinnung von Kohlenwasserstoffen schadlos beseitigt.

EP 0 157 339 A2

**FRIED. KRUPP GESELLSCHAFT MIT BESCHRÄNKTER HAFTUNG**

in Essen

Verfahren zur Herstellung von Kohlenwasserstoffen
aus Klärschlamm

Die Erfindung bezieht sich auf ein Verfahren zur Herstellung von Kohlenwasserstoffen aus Klärschlamm, insbesondere frischem Belebtschlamm. Zu den Kohlenwasserstoffen, die nach diesem Verfahren hergestellt werden, gehören die Alkane, die Zykloalkane und die Aromaten, deren Moleküle 1 bis ca. 36 Kohlenstoffatome enthalten. Diese gasförmigen und flüssigen Kohlenwasserstoffe werden insbesondere als Brennstoff und Chemierohstoff eingesetzt. Klärschlamm entsteht bei der biologischen Abwasserreinigung und ist ein Gemisch aus Wasser, toten sowie lebensfähigen Mikroorganismen und organischen sowie anorganischen Feststoffteilchen. Der Klärschlamm hat einen Wassergehalt von ca. 96 bis 98,5 Gew.-% und kann durch geeignete Verfahren (Sedimentation, längere Lagerung, Trocknung, Faulung, Filtration) entwässert werden, wobei je nach Entwässerungsverfahren ein Klärschlamm mit einem Wassergehalt von 70 bis 95 Gew.-% anfällt. Es ist erforderlich, den Klärschlamm schadlos zu beseitigen, was durch geordnete Ablagerung, Kompostierung bzw. landwirtschaftliche Nutzung und Verbrennung geschehen kann. Jede dieser Methoden hat aber bestimmte Nachteile, und es ist daher erforderlich, nach neuen Wegen zur schadlosen Klärschlammbeseitigung zu suchen.

Es ist bereits ein Verfahren zur Gewinnung von Kohlenwasserstoffen aus Klärschlamm bekannt, bei dem der Klärschlamm unter Ausschluß von Sauerstoff in geschlossenen Behältern durch die Lebenstätigkeit von Mikroorganismen zersetzt wird, wobei insbesondere Methan entsteht. Dieser industriell durchgeführte Faulungsprozeß ist aber recht störanfällig und erbringt nur eine verhältnismäßig geringe Ausbeute an Kohlenwasserstoffen, bezogen auf den im Klärschlamm enthaltenen Kohlenstoff. Außerdem fällt beim Faulprozeß als Rückstand eine große Menge Faulschlamm an, der ebenfalls beseitigt werden muß.

Der Erfindung liegt daher die Aufgabe zugrunde, ein Verfahren zur Gewinnung von Kohlenwasserstoffen aus Klärschlamm zu schaffen, das eine große Kohlenwasserstoff-Ausbeute erbringt, kostengünstig sowie betriebssicher arbeitet, mit Klärschlamm verschiedener Herkunft betrieben werden kann und lediglich eine kleine Menge Abfallprodukte liefert.

Die der Erfindung zugrundeliegende Aufgabe wird dadurch gelöst, daß der Klärschlamm, dessen Wassergehalt 70 bis 98,5 Gew.-% beträgt, bei einer Temperatur von 300 bis 600 $^{\circ}$C und einem Druck von 100 bis 500 bar behandelt wird, daß gleichzeitig oder unmittelbar nach dieser Behandlung bei gleichem Druck und gleicher Temperatur in Gegenwart eines Katalysators eine Hydrierung mit Wasserstoff in einer Menge von 2 bis 25 Gew.-%, bezogen auf den Kohlenstoffgehalt des eingesetzten Klärschlamms, erfolgt, daß die Reaktionszeit für die Druck-Temperatur-Behandlung und die Hydrierung 2 bis 120 Minuten beträgt und daß die Gasphase danach durch stufenweise Senkung des Drucks und/oder der Temperatur in ihre Bestandteile zerlegt wird, die in mehreren Fraktionen anfallen.

Bei einer Temperatur von 300 bis 600 $^{\circ}$C und einem Druck von 100 bis 500 bar werden die im Klärschlamm enthaltenen organischen Verbindungen gecrackt, und

0157339

die dabei entstehenden Zersetzungsprodukte werden im Wasserdampf wegen des herrschenden hohen Drucks weitgehend gelöst. Durch den Lösungsvorgang wird eine weitere Verkokung der Zersetzungsprodukte weitgehend vermieden. Das im Klärschlamm enthaltene Wasser wird also in vorteilhafter Weise als Lösungsmittel für die bei der Druck-Temperatur-Behandlung entstehenden gasförmigen und flüssigen Zersetzungsprodukte des Klärschlamms verwendet, bei denen es sich fast quantitativ um Kohlenwasserstoffe handelt. Durch die nach der Erfindung vorgesehene katalytische Hydrierung wird erreicht, daß die bei der Druck-Temperatur-Behandlung anfallenden ungesättigten unstabilen Kohlenwasserstoffe in stabilere gesättigte Kohlenwasserstoffe überführt werden. Die nach der Hydrierung vorliegende Gasphase, die aus Wasser, Wasserstoff und Kohlenwasserstoffen besteht, kann durch stufenweise Senkung des Drucks und/oder der Temperatur in ihre Bestandteile zerlegt werden, wobei neben Wasser flüssige und gasförmige Kohlenwasserstoffe anfallen. Die Ausbeute an Kohlenwasserstoffen ist sehr hoch und beträgt bis 80 Gew.-% Kohlenstoff des Kohlenstoffgehalts des Klärschlamms. Beim erfindungsgemäßen Verfahren fällt als Rückstand eine Feststoffsuspension an, die durch Sedimentation oder Filtration in ihre Bestandteile zerlegt werden kann. Die abgetrennten Feststoffteilchen haben nur noch einen geringen Wassergehalt und können ohne weiteres auf einer geeigneten Deponie abgelagert werden. Die von den Feststoffen abgetrennte Flüssigkeit wird mit dem bei der Trennung der Gasphase anfallenden Wasser gemischt und einer Nachreinigung (z. B. Behandlung mit Aktivkohle und Neutralisation) unterworfen. Nach dem erfindungsgemäßen Verfahren können also die im Klärschlamm enthaltenen Wertstoffe genutzt und die Abfallprodukte auf einfache Weise schadlos beseitigt werden.

Nach der Erfindung ist ferner vorgesehen, daß bei gleichzeitiger Durchführung der Druck-Temperatur-Behandlung und der Hydrierung als Katalysator NaOH, KOH, $Na_4SiO_4$, $NaBO_2$ oder $KBO_2$ in einer Menge von 0,001 bis 0,5 Gew.-%, bezogen auf das im Klärschlamm enthaltene Wasser, verwendet wird. Da der Katalysator im Wasser bzw. in der Wasserdampfphase gelöst ist, liegt er im Reaktionssystem in sehr homogener Verteilung vor und hat deshalb eine besonders große Wirkung.

Nach der Erfindung ist alternativ vorgesehen, daß nach der Druck-Temperatur-Behandlung des Klärschlamms die beladene Wasserdampfphase abgetrennt, mit Wasserstoff gemischt und über einen Festbettkatalysator geleitet wird, der aus einer sauren Komponente und einer Redox-Komponente besteht, wobei als saure Komponente $Al_2O_3$, $SiO_2$, $Fe_2O_3$ und/oder Zeolithe und als Redox-Komponente $MoO_3$ mit CoO und/oder $WO_3$ mit NiO verwendet werden. Der Festbettkatalysator wird durch die in der Wasserdampfphase vorhandenen Schwefel- und Stickstoffverbindungen nur in sehr geringem Maße geschädigt, und auf den Katalysatorteilchen lagern sich keine festen Kohlenstoffverbindungen bzw. kein Kohlenstoff ab, so daß der Festbettkatalysator eine vorteilhaft lange Lebensdauer hat.

Zur Auftrennung des Reaktionsgemisches hat es sich nach der Erfindung als besonders vorteilhaft erwiesen, wenn aus der Gasphase durch Senkung ihres Drucks und ihrer Temperatur auf 2 bis 10 bar und 150 bis 200 $^{\circ}$C eine Ölfraktion und durch Senkung ihres Drucks und ihrer Temperatur auf 1 bar und 25 $^{\circ}$C eine Wasser-Rohbenzin-Fraktion abgeschieden wird, wobei gleichzeitig ein kohlenwasserstoffhaltiges Gas anfällt. Dabei kann die Wasser-Rohbenzin-Fraktion durch Dekantieren getrennt werden. Durch die erfindungsgemäße Auftrennung der Gasphase werden in vorteilhafter Weise drei Kohlenwasser-

0157339

stoff-Fraktionen gewonnen, die nach bekannten Methoden
weiter aufgetrennt oder für sich weiterverarbeitet
werden können.

Der Gegenstand der Erfindung wird nachfolgend anhand
der Zeichnung näher erläutert. Es zeigen

Fig. 1                        Fließbild des erfindungsgemäßen Verfahrens, das
                              mit räumlicher Trennung
                              der Druck-Temperatur-Behandlung und der Hydrierung
                              arbeitet,

Fig. 2                        Fließbild des erfindungsgemäßen Verfahrens, das
                              mit gleichzeitiger Druck-
                              Temperatur-Behandlung und
                              Hydrierung arbeitet.

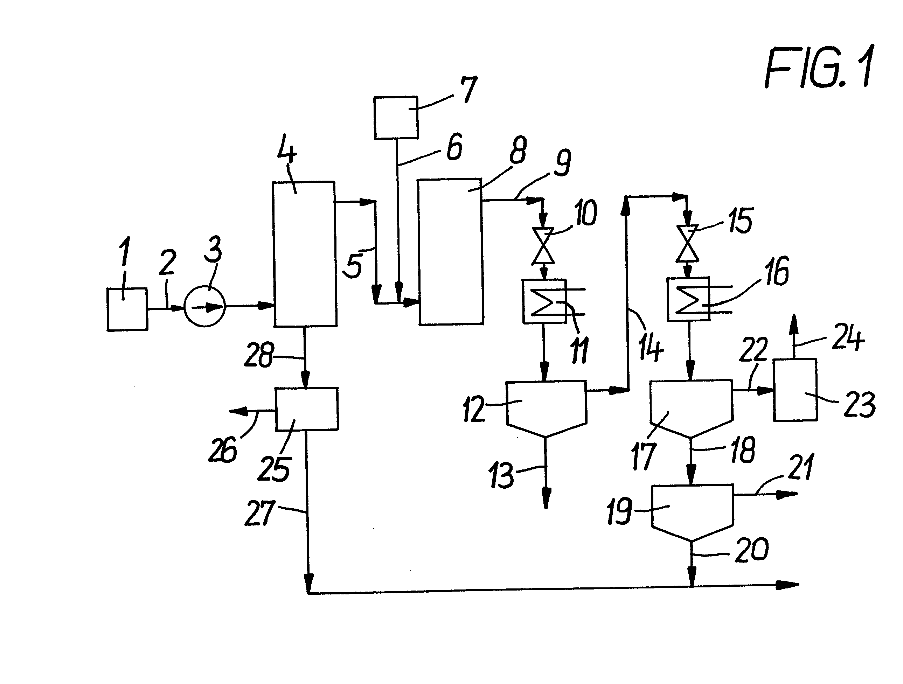

Bei dem in Fig. 1 dargestellten Verfahren wird der
Klärschlamm aus dem Vorratstank 1 über die Leitung 2
und die Druckpumpe 3 in den beheizten Reaktor 4 gefördert. Der Klärschlamm hat einen Wassergehalt von
70 bis 98,5 Gew.-% und wird im Reaktor 4 ca. 2 bis
120 Minuten einer Temperatur von 300 bis 600 $^{\circ}$C und
einem Druck von 100 bis 500 bar ausgesetzt. Die
Wasserdampfphase gelangt über die Leitung 5 in den
Hydrierungsreaktor 8, in dem ein Festbettkatalysator
angeordnet ist. Der Leitung 5 wird über die Leitung 6
aus dem Vorratstank 7 Wasserstoff zugeführt. Im
Hydrierungsreaktor 8 herrschen die Druck- und Temperaturverhältnisse wie im Reaktor 4, wobei natürlich
gewisse anlagenbedingte Druck- und Temperaturschwankungen auftreten können. Der Katalysator beschleunigt
sowohl die Crackungs- als auch die Hydrierungsreaktionen.
Die Verweilzeit der Gasphase im Hydrierungsreaktor 8

0157339

**beträgt ca. 1 bis 30 Minuten.**

Die wasserstoffhaltige Gasphase gelangt über die Leitung 9 in das Entspannungsventil 10 und den Wärmeaustauscher 11, wo eine Senkung des Druck und der Temperatur auf 2 bis 10 bar und 150 bis 250 $^{o}$C erfolgt. Im Abscheider 12 fällt dann aus der Gasphase eine Ölfraktion aus, die über die Leitung 13 abgeführt wird. Die Ölfraktion kann entweder zur Energiegewinnung verbrannt oder destillativ in ihre Bestandteile zerlegt werden. Aus dem Abscheider 12 gelangt die Gasphase über die Leitung 14 in das Entspannungsventil 15 und den Wärmeaustauscher 16, wo eine Senkung des Drucks und der Temperatur auf 1 bar und 25 $^{o}$C (Normalbedingungen) erfolgt. Im Abscheider 17 fällt dann eine Wasser-Rohbenzin-Fraktion aus, die über die Leitung 18 in die Trennvorrichtung 19 gelangt. In der Trennvorrichtung 19 trennt sich die Benzinphase vom Wasser, wobei das Benzin über die Leitung 21 abfließt und entweder zur Energiegewinnung verbrannt oder durch destillative Methoden gereinigt wird. Das Wasser wird über die Leitung 20 abgeführt. Die im Abscheider 17 anfallende Gasphase enthält neben Wasserstoff gasförmige Kohlenwasserstoffe und wird über die Leitung 22 in die Gasreinigungsvorrichtung 23 gefördert, wo $NH_3$ und $H_2S$ abgeschieden werden. Das gereinigte Gas wird über die Leitung 24 abgeführt und kann destillativ in die Bestandteile getrennt oder zur Energiegewinnung verbrannt werden.

Aus dem Reaktor 4 gelangt der wasser- und feststoffhaltige Rückstand über die Leitung 28 in die Trennvorrichtung 25, die als Dekanter oder Trommelfilter ausgebildet sein kann. Das abgetrennte Wasser wird über die Leitung 27 abgeführt, mit dem im Abscheider 19 anfallenden Wasser vereinigt und dann einer Nach-

0157339

reinigung (adsorptive Behandlung mit Aktivkohle und ggf. Neutralisation) zugeführt, bevor es in die Kanalisation oder einen Vorfluter eingeleitet wird. Der in der Trennvorrichtung 25 anfallende Feststoff wird über die Leitung 26 auf eine geeignete Deponie transportiert.

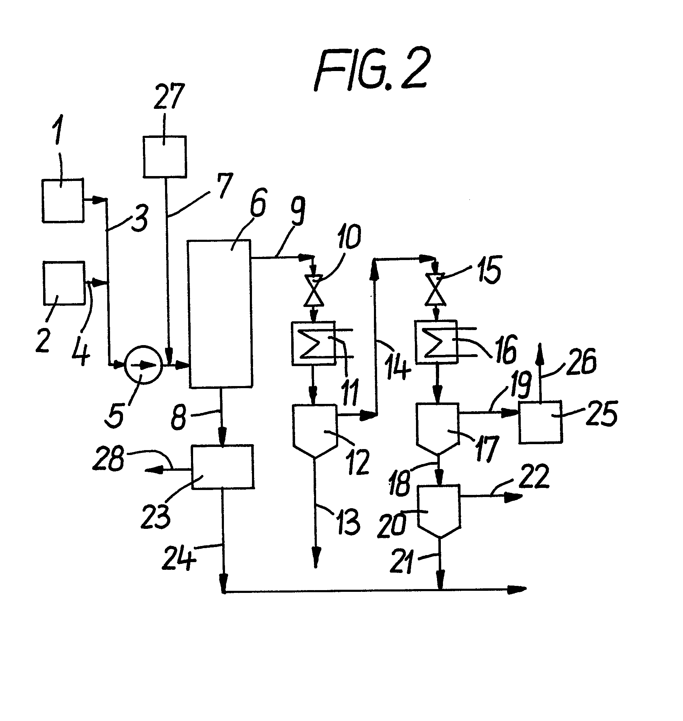

Bei dem in Fig. 2 dargestellten Verfahren wird der Klärschlamm aus dem Vorratstank 1 über die Leitung 3 und die Druckpumpe 5 in den Reaktor 6 gefördert. Dem Klärschlamm wird aus dem Tank 2 über die Leitung 4 NaOH, KOH, $Na_4SiO_4$, $NaBO_2$ oder $KBO_2$ in einer Menge von 0,001 bis 0,5 Gew.-%, bezogen auf das im Klärschlamm enthaltene Wasser, zudosiert. Diese Verbindungen wirken als Crack- und Hydrierungskatalysator und können dem Klärschlamm entweder in Form einer wässrigen Lösung oder als Feststoff zugegeben werden. Aus dem Tank 27 wird dem Klärschlamm über die Leitung 7 Wasserstoff zugemischt. Im Reaktor 6 verbleibt der Klärschlamm bei einem Druck von 100 bis 500 bar und einer Temperatur von 300 bis 600 $^O$C 2 bis 120 Minuten.

Aus dem Reaktor 6 wird die Wasserdampfphase, die Wasserstoff und Kohlenwasserstoffe enthält, über die Leitung 9 in das Entspannungsventil 10 und den Wärmeaustauscher 11 gefördert, wo eine Senkung des Drucks und der Temperatur auf 2 bis 10 bar und 150 bis 250 $^O$C erfolgt. Im Abscheider 12 fällt dann eine Ölfraktion aus, die über die Leitung 13 abfließt. Die Ölfraktion kann entweder zur Energiegewinnung verbrannt oder durch destillative Methoden in ihre Bestandteile zerlegt werden. Aus dem Abscheider 12 wird die Gasphase über die Leitung 14 in das Entspannungsventil 15 und den Wärmeaustauscher 16 gefördert, wo eine Senkung des Drucks und der Temperatur auf 1 bar und 25 $^O$C (Normalbedingungen) erfolgt. Im Abscheider 17 fällt dann eine Wasser-Rohbenzin-Fraktion aus, welche über die Leitung 18 in die Trennvorrichtung 20 fließt, in der sich das Wasser von der Benzinfraktion abscheidet und über die Leitung 21 abgeführt wird, während das Benzin die Trennvorrichtung 20 über die Leitung 22 verläßt. Das in der Trennvorrichtung 20 anfallende Wasser kann auch noch eine bestimmte Menge des Katalysators enthalten. Die im Abscheider 17 anfallende Gasphase, die neben Wasserstoff und gasförmigen Kohlenwasserstoffen noch $H_2S$ und $NH_3$ enthält, wird über die Leitung 19 in die Gasreinigungsvorrichtung 25 gefördert und dort vom $NH_3$ und $H_2S$ befreit. Das aus Wasserstoff und den gasförmigen Kohlenwasserstoffen bestehende Gas verläßt die Gasreinigungsvorrichtung 25 über die Leitung 26 und kann zur Energiegewinnung verbrannt oder durch destillative Methoden in die Bestandteile zerlegt werden. Auch die aus der Leitung 22 abfließende Benzinfraktion kann durch Destillation gereinigt werden.

Aus dem Reaktor 6 wird der aus Wasser und Feststoffen bestehende Rückstand über die Leitung 8 in die Trennvorrichtung 23 geführt, die als Dekanter oder Trommelfilter ausgeführt sein kann. In der Trennvorrichtung 23 wird das Wasser von den Feststoffteilchen abgetrennt und gelangt über die Leitung 24 in eine Reinigungsvorrichtung, wo eine Nachbehandlung mit Aktivkohle und ggf. eine Neutralisation erfolgt. Das in den Trennvorrichtungen 23 und 20 anfallende Wasser wird gemischt und der Nachbehandlung zugeführt, bevor die Einleitung in einen Vorfluter oder die Kanalisation erfolgt.

Nach dem in Fig. 2 dargestellten Verfahren wurde Klärschlamm behandelt, der einen Wassergehalt von 98,12 Gew.-% und einen Kohlenstoffgehalt von 0,81 Gew.-% hatte. Im Reaktor 6 herrschte ein Druck von 500 bar

0157339

und eine Temperatur von 400 $^{\circ}$C. Dem Klärschlamm wurde als Katalysator $Na_4SiO_4$ in einer Menge von 0,5 Gew.-%, bezogen auf den Wassergehalt des Klärschlamms, zudosiert. Nach einer Reaktionszeit von 30 Minuten wurden drei kohlenwasserstoffhaltige Fraktionen aus der überkritischen Gasphase abgeschieden. Die Ölfraktion wurde bei 2 bar und 150 $^{\circ}$C erhalten, während die Benzinfraktion und die gasförmige Kohlenwasserstofffraktion bei Normalbedingungen anfielen. 72,6 Gew.-% des eingesetzten Kohlenstoffs wurden in den drei Fraktionen als Kohlenwasserstoffe gewonnen, wobei im einzelnen folgende Ausbeuten erzielt wurden:

| | |
|---|---|
| Ölfraktion ($C_{10}$ - $C_{36}$) | 34,3 Gew.-% |
| Benzinfraktion ($C_6$ - $C_9$) | 2,1 Gew.-% |
| gasförmige Kohlenwasserstoffe ($C_1$ - $C_5$) | 36,2 Gew.-% |

Im Reaktor 6 waren ca. 20 Gew.-% Wasserstoff, bezogen auf den Kohlenstoffgehalt des Klärschlamms, anwesend.

# A n s p r ü c h e

1. Verfahren zur Herstellung von Kohlenwasserstoffen aus Klärschlamm, d a d u r c h   g e k e n n - z e i c h n e t, daß der Klärschlamm, dessen Wassergehalt 70 bis 98,5 Gew.-% beträgt, bei einer Temperatur von 300 bis 600 $^{\circ}$C und einem Druck von 100 bis 500 bar behandelt wird, daß gleichzeitig oder unmittelbar nach dieser Behandlung bei gleichem Druck und gleicher Temperatur in Gegenwart eines Katalysators eine Hydrierung mit Wasserstoff in einer Menge von 2 bis 25 Gew.-%, bezogen auf den Kohlenstoffgehalt des eingesetzten Klärschlamms, erfolgt, daß die Reaktionszeit für die Druck-Temperatur- Behandlung und die Hydrierung 2 bis 120 Minuten beträgt und daß die Gasphase danach durch stufenweise Senkung des Drucks und/oder der Temperatur in ihre Bestandteile zerlegt wird, die in mehreren Fraktionen anfallen.

2. Verfahren nach Anspruch 1, dadurch gekennzeichnet, daß bei gleichzeitiger Durchführung der Druck- Temperatur-Behandlung und der Hydrierung als Katalysator NaOH, KOH, $Na_4SiO_4$, $NaBO_2$ oder $KBO_2$ in einer Menge von 0,001 bis 0,5 Gew.-%, bezogen auf das im Klärschlamm enthaltene Wasser, verwendet wird.

3. Verfahren nach Anspruch 1, dadurch gekennzeichnet, daß nach der Druck-Temperatur-Behandlung des Klärschlamms die beladene Wasserdampfphase abgetrennt, mit Wasserstoff gemischt und über einen Festbettkatalysator geleitet wird, der aus einer sauren Komponente und einer Redox-Komponente besteht, wobei als saure Komponente $Al_2O_3$, $SiO_2$ $Fe_2O_3$ und/oder

Zeolithe und als Redox-Komponente $MoO_3$ mit CoO und/oder $WO_3$ mit NiO verwendet werden.

4. Verfahren nach den Ansprüchen 1 bis 3, dadurch gekennzeichnet, daß aus der Gasphase durch Senkung ihres Drucks und ihrer Temperatur auf 2 bis 10 bar und 150 bis 250 °C eine Ölfraktion und durch Senkung ihres Drucks und ihrer Temperatur auf 1 bar und 25 °C eine Wasser-Rohbenzin-Fraktion abgeschieden wird, wobei gleichzeitig ein kohlenwasserstoffhaltiges Gas anfällt.

FIG.1

1/2

0157339

FIG. 2